(19) Europäisches Patentamt
European Patent Office
Office européen des brevets

(11) **EP 3 936 917 B1**

(12) **EUROPEAN PATENT SPECIFICATION**

(45) Date of publication and mention
of the grant of the patent:
**01.05.2024 Bulletin 2024/18**

(21) Application number: **20185029.4**

(22) Date of filing: **09.07.2020**

(51) International Patent Classification (IPC):
*G02B 7/28* (2021.01)        *G02B 7/36* (2021.01)
*G06V 40/16* (2022.01)       *H04N 23/67* (2023.01)
*H04N 23/80* (2023.01)       *H04N 23/611* (2023.01)

(52) Cooperative Patent Classification (CPC):
**G02B 7/365; G02B 7/36; G06V 40/166;**
**H04N 23/611; H04N 23/671; H04N 23/672;**
**H04N 23/673; H04N 23/80**

(54) **A DIGITAL IMAGE ACQUISITION APPARATUS AND AN AUTOFOCUS METHOD**

DIGITALE BILDERFASSUNGSVORRICHTUNG UND AUTOFOKUSVERFAHREN

APPAREIL D'ACQUISITION D'IMAGES NUMÉRIQUES ET PROCÉDÉ DE MISE AU POINT AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.01.2022 Bulletin 2022/02**

(73) Proprietor: **Beijing Xiaomi Mobile Software Co., Ltd.**
**Beijing 100085 (CN)**

(72) Inventors:
• **BAZHYNA, Andriy**
  **33720 Tampere (FI)**
• **NIKKANEN, Jarno**
  **33720 Tampere (FI)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
| | |
|---|---|
| US-A1- 2002 001 398 | US-A1- 2007 229 797 |
| US-A1- 2007 286 590 | US-A1- 2009 116 830 |
| US-A1- 2010 157 135 | US-A1- 2012 075 492 |
| US-A1- 2015 023 602 | US-A1- 2020 137 298 |

EP 3 936 917 B1

## Description

### Filed

It is an object of the present invention to provide a method for autofocusing. Further, it is an object of the present invention to provide a digital image acquisition apparatus for performing the autofocusing method.

### Background

The invention is related to camera autofocusing (AF). The role of an AF system is to make sure that a camera lens or lenses is moved to such a position that the object of interest falls into the Depth of Field of the camera lens or lenses. This maximizes the amount of details and minimizes optical blur. Focus can be manual, fixed or automatic. Most of the modern mobile cameras use autofocus.

The AF system is one of 3 main runtime camera control algorithms (CCA): AWB (auto white balance), AF, AE (autoexposure). The autofocus algorithm utilizes raw data from the sensor as well as any additional data which can improve accuracy.

Today's most common AF technologies are:

- Contrast detection AF (CDAF) is most commonly used being an iterative method that is based on the number of picture details.

- Phase detection AF (PDAF) which requires special sensor technology.

    1. 2PD-PDAF is a PDAF technology in which every pixel consists of 2 photodiodes and can operate even below 1lux illumination levels. However, the maximum resolution is limited since two photodiodes are required per one pixel.

    2. MS-PDAF is a metal shield based PDAF that has worse low light performance and lower PDAF pixel density.

    3. WM-PDAF is a wide micro lens based PDAF in which one micro lens covers two pixels in PDAF pixel positions. The performance is similar to MS-PDAF except that less of the light signal is lost due to not blocking the light with metal shields.

- Time of Flight (ToF) - Laser AF (LAF) which requires separate hardware.

- Continuous AF(CAF) - Running AF continuously during view finding/preview in order to have a lens in in-focus position upon still capture or at least to reduce the focusing time, or to enable AF for video.

- Hybrid AF (HAF) - a combination of several different methods to make a decision about the proper lens position.

The benefits of CDAF is that it is simple and cost-efficient. It can be run in pure software without special hardware. However, there is still some key limitations of CDAF - speed which is resulted from the following factors:

    1. Time for determining the direction of lens movement. It requires at least 2 iteration loops (1-3 frames each) to determine a direction for moving the lens.

    2. Time for performing coarse search requiring 3-8 iterations (1-3 frames each). Therein, the step size cannot be increased because it easily could bypasses peak and causes oscillations.

CDAF speed calculation:
When the camera runs at 30 frames per seconds (fps), a single frame comes every 30ms. A single AF iteration takes 2-3 frames (there is time needed to settle the lens at the new position). Therefore, full AF search takes at least 2*2(direction search) + 2*3(3 coarse step) + 2*1 = 10 frames or 300ms.

In practice. The total focusing time may reach 1 second or even more.

The first 2 steps of CDAF takes 70-80% of the total AF time.

The above numbers make speed performance of classical CDAF alone not acceptable for most of the modern mobile phones and digital camera.

There are several solutions which significantly outperforms CDAF solutions in terms of speed, for example PDAF and ToF.

Phase Detection Auto Focus is common names for sensor-based technologies which help to estimate lens displacement from the focus position and direction to which the lens must be moved. However, PDAF sensors are more expensive in design and manufacturing. They also require dedicated image processing pipe blocks to process phase-sensitive pixels.

The Time-of-Flight (ToF) is another method to address the speed limit of CDAF. ToF measures the distance between a sensor and an object, based on the time difference between the emission of a signal and its return to the sensor, after being reflected by an object. However, ToF also relies on expensive hardware.

Both PDAF and ToF can reduce AF delay to be below 300 ms or even below 100ms. A key limitation of the above solutions is extra cost. Efficient solution which significantly improves AF speed requires either special sensor types or separate costly hardware. In addition, PDAF and LAF technologies have limited distance range. PDAF and ToF also suffer from reliability limitations: low light due to high level of noise (PDAF); high-level light pollution (ToF), distance (ToF) etc. They cannot fully replace CDAF in all use cases.

Most of modern AF algorithms work as HAF (PDAF and LAF combined with CDAF) and utilize all available data. Therefore, introducing more data to the AF algorithm can increase scenarios when AF is fast and reliable.

PDAF and ToF cannot fully eliminate the need for CDAF (in all use cases) as fall back solution. Getting the maximum in terms of speed performance out of CDAF is still very important.

US20120075492 A1 discloses an autofocus method includes acquiring an image of a scene that includes one or more out of focus faces and/or partial faces. The method includes detecting one or more of the out of focus faces and/or partial faces within the digital image by applying one or more sets of classifiers trained on faces that are out of focus.

US2015023602 A1 discloses systems and methods of quickly recognizing or differentiating many objects. Said systems include an object model database storing recognition models associated with known modeled objects.

US2020137298A1 discloses a deep-learning-based system to assist camera autofocus.

US2007286590A1 discloses an imaging apparatus includes: a face detecting part configured to detect a face area from the input image inputted from an imaging apparatus; a subject distance computing part configured to compute a subject distance based on the size of a face detected in the face detecting part; a lens operating range computing part configured to estimate a focus position based on information about the subject distance computed in the subject distance computing part, and to set a focus lens operating range shorter than an entire operating range of a focus lens; and a focus control part configured to move the focus lens within the lens operating range set in the lens operating range computing part, and to decide a position at which the focus lens is set.

US2009116830A1 discloses an imaging apparatus and method for controlling the same.

US2007229797A1 discloses a distance measuring apparatus and method in which a target subject is detected from image data obtained through imaging, the distance to the object is calculated based on the size of the target subject, and the distance to the target subject is further measured using a distance measuring sensor.

US2010157135A1 discloses a method, apparatus and software product for a passive estimation of a distance between a camera or an electronic device comprising the camera and an identified object or objects having one or more known dimensions and located substantially in one object plane using an image for implementing by the camera/electronic device one or more imaging algorithms using that distance.

US2002001398A1 discloses a method and apparatus for object recognition, based on image data taken and acquired by any one of a plurality of cameras, a predetermined object included in the image is recognized by pattern matching.

Therefore, it is an object of the present invention to provide a method for autofocusing as well as a digital image acquisition apparatus for performing the autofocusing method to overcome the main limitations of CDAF-slowness.

## Summary

In an aspect of the present invention, a method for autofocusing based on object size as defined in claim 1 and a corresponding apparatus as defined in claim 8 is provided.

Therein, the method is implemented by a digital image acquisition apparatus. Preferably, the digital image acquisition apparatus comprises: at least one lens for acquiring light rays from objects, an image sensor to transform the acquired light rays into digital signals, a lens actuator for adjusting a lens position, a memory to store instructions and a processor to execute the stored instructions, wherein the memory is connected to the processor and the processor is connected to the image sensor and the lens actuator for receiving the acquired signal of the image sensor and control the lens actuator, respectively. More preferably, the apparatus further comprises a lens sensor for detecting the actual lens position. Therein, the lens and the image sensor collaboratively acquire a digital image of a scene. After the digital image is acquired, the one or more objects in the image may be recognized or classified by the processor by pattern recognition technologies. The pattern recognition system may either be a build-in system of the image acquisition apparatus or an external system. Subsequently, one or more objects in the image are recognized, then the size of the recognized object can be determined based on a pre-stored database. This size is further used for calculating a distance between the lens and the recognized object. Finally, the lens position is adjusted by the lens actuator based on the calculated distance.

The pre-stored database comprises ground truth sizes, wherein the ground truth size comprises mappings between objects and their respective size. Ground truth sizes are those sizes of well detectable real-life objects. They have very small variability in the population. Thus, they are very suitable for making any calculations for unknown parameters as a reference.

Preferably, the distance is calculated further based on a size of projection relative to sensor size and focal length, preferably according to the following equation:

$$Distance\ to\ object\ (mm) = \frac{f(mm) \times object\ height\ (mm) \times sensor\ height\ (pixels)}{object\ height\ (pixels) \times sensor\ height\ (mm)}.$$

The equation is derived based on the properties of similar triangles in geometry.

$$\frac{Sensor\ dimension\ (mm)}{Focal\ length\ f\ (mm)} = \frac{Field\ dimension\ *}{Distance\ to\ Field\ d\ *} \tag{1}$$

herein, the "Distance to field d" and "Field dimension" should be in the same units.

Light rays going through the lens such that the "Field dimension" to "Distance to field" ratio is equal to the "Sensor dimension" to "Focal length" ratio (as they are part of similar triangles on different sides of the lens). "Field dimension" corresponds to the "Object height" in reality. Therefore, "Field dimension" can be substituted with "Object height" and analogously "Distance of Field" can be substituted with "Distance to Object". Using the following two steps one obtains:

$$Object\ height\ on\ sensor\ (mm) = \frac{Sensor\ height\ (mm) \times Object\ height\ (pixels)}{Sensor\ height\ (pixels)} \tag{2}$$

$$\frac{Object\ height\ on\ sensor\ (mm)}{Focal\ length\ (mm)} = \frac{Object\ height}{Distance\ to\ Object\ *} \tag{3}$$

Rearrange the ratio to compute the desired unknown value. For example:

$$Distance\ to\ Object\ * = \frac{Object\ height\ \times Focal\ Length\ (mm)}{Object\ height\ on\ sensor\ (mm)} \tag{4}$$

$$Object\ height = \frac{Distance\ to\ Object\ * \times Object\ height\ on\ sensor\ (mm)}{Focal\ Length\ (mm)} \tag{5}$$

Since normally either the distance to the object or real object height is an unknown value. According to the present invention, real object height is known as ground truth size. Therefore, the distance to the object can be calculated based on the object height and other known values as described above. For the present invention, we combine equation (4) with equation (2) in order to calculate the Distance to Object.

The method further comprises the steps of: determining by a sensor a contrast metric and performing fine search iteratively after the lens position is adjusted; adjusting a new lens position in each iteration until a contrast peak position is reached. Therein, the fine search is one of the major steps of the full search Contrast Detection Auto Focus. It is applied in a similar manner as traditional CDAF, namely, to find accurate lens position which corresponds to a desired contrast level or the exact contrast peak position with several iterations.

Preferably, prior to performing the fine search, determining a direction of lens movement based on the changes of the contrast metric. Therein, the determination of the direction of the moment is also one of the major steps of traditional CDAF as a preparation step of hill climbing search. However, according to the present invention, the determination step is applied in combination with the fine search instead of the coarse search in CDFA.

Preferably, if the position the lens is not known, adjusting the lens to focus to infinity as an initial position. Therein, infinity focus is the opposite of a narrow depth of field. It is similar to an extraordinarily wide depth of field.

Preferably, the pattern recognition is face recognition. The face recognition system may be either a build-in system of the present image acquisition apparatus, or alternatively, it could be an external system or application implemented in the terminals. Preferably, the face recognition may be feature-based recognition, appearance-based recognition, template-based recognition or a combination of one or more of the above. More preferably, the recognition algorithms may be further combined with technical neural network or support vector machine to further improve the performance. With the help of the state-of-the-art facial recognition technologies, different parts of human face can be easily identified. Subsequently, using the pre-stored ground truth sizes for the respective human parts, such us distance between eyes, size of the ears, size of the nose, etc, the distance between the lens and the human can be calculated with ease.

Preferably, the pattern recognition is Deep Learning Net based object recognition.

Preferably, the method is combined with other autofocusing technologies. Similar to other Hybrid autofocus method, the present invention may be freely combined with any of the state-of-the-art AF technologies as described above. Preferably, the method is combined with classical CDAF.

Further, it is an object of the present invention to provide a digital image acquisition apparatus to carry out the steps of the method described above. Preferably, the digital image acquisition apparatus comprises: at least one lens for acquiring light rays from objects, an image sensor to transform the acquired light rays into digital signals, a lens actuator for adjusting a lens position, a memory to store instructions and a processor to execute the stored instructions. More preferably, the apparatus further comprises a lens sensor for detecting the actual lens position.

The invention is further described with reference to the accompanying figures.

The figures show:

Fig. 1A - 1B:    comparison of an image out of focus and in focus,
Fig. 2:    an example of an autofocus control loop (prior art),
Fig. 3:    a traditional Contrast Detection Auto Focus system (prior art),
Fig. 4:    an illustration of hill climbing search with regard contrast curve (prior art),
Fig. 5:    a Time of Flight system (prior art),
Fig. 6:    an illustration of the performance of PDAF and ToF based autofocus system (prior art),
Fig. 7:    some examples of annotated objects,
Fig. 8:    the distance estimation process,
Fig. 9:    an illustration of the performance of the AF algorithm according to the present invention,
Fig. 10:    a camera system integrated with the present invention,
Fig. 11:    flow chart illustrating the steps of a first embodiment of the present invention,
Fig. 12:    a device according to an embodiment of the present invention.

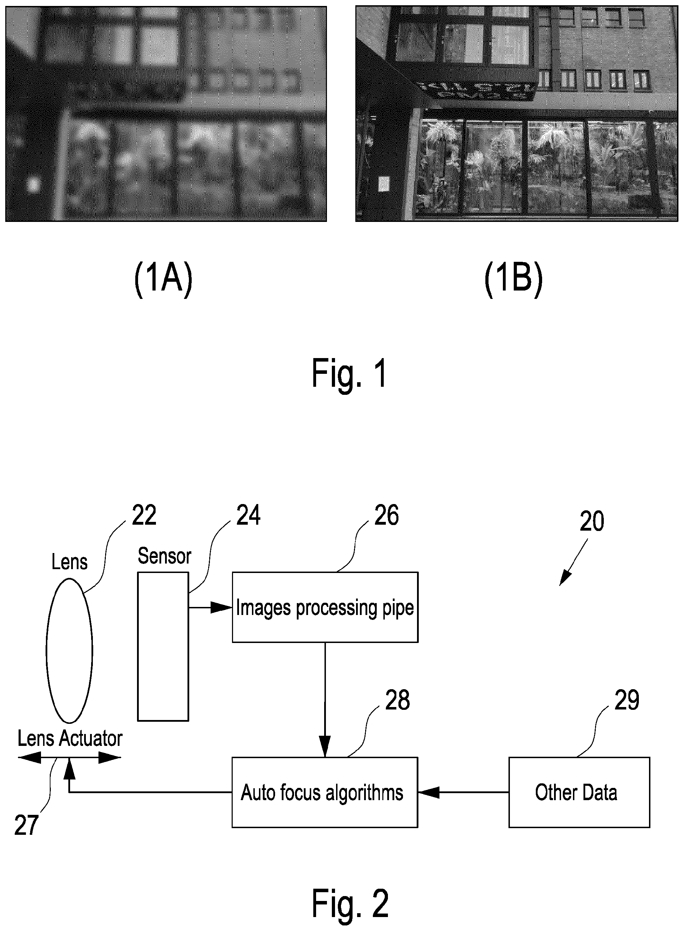

Figure 1A shows an image out of focus and Figure 1B is an image in focus. The role of the autofocus system is to make sure that the camera lens is moved to such a position that the object of interest falls into Depth of Field of the camera lenses. This maximizes the number of details and minimizes optical blur. Focus can be manual, fixed or automatic. Most of the modern mobile cameras use autofocus. AF system is one of 3 main runtime camera control algorithms (CCA): AWB (auto white balance), AF, AE (autoexposure).

Figure 2 shows an example of an autofocus control loop. A lens 22 acquires light rays from objects, a sensor 24 transforms the acquired light rays into digital signals, then an image processing pipe 26 further process the acquired image and outputs certain data to feed into an autofocus algorithm 28, the AF algorithm may also be fed with other data 29 such us: initial position of the lens, information with respect to different modes, etc., or directly utilizes raw data from the sensor. Further, the lens actuator 27 takes the result of the AF algorithm 28 to adjust the lens position. AF runs in a closed loop. A single AF iteration performs the above steps and the next iteration waits until the lens arrives at the new position. The iteration stops if the desired contrast value or contrast peak of the image has been reached.

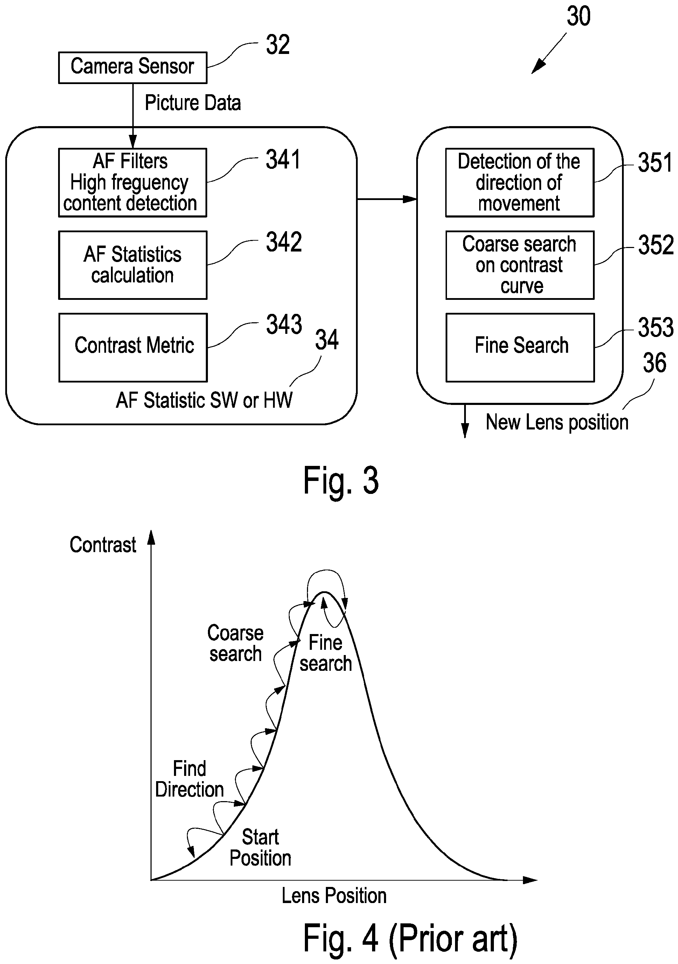

Figure 3 shows a Contrast Detection Auto Focus system. CDAF is the most commonly used variant of AF for digital cameras alone or in combination with other methods. CDAF uses a hill climbing search to find a peak on a contrast curve. CADF system consists of a camera sensor 32 to acquire picture data and the AF statistic block 34 to calculate the contrast metric used to build the contrast curve. Subsequently, the new lens position is determined by iteratively performing each of the steps in block 36.

Figure 4 is an illustration of hill climbing search with regard to an exemplified contrast curve, it also shows the performance of a Contrast Detection Auto Focus system. In well- designed camera systems, the contrast curve has one single contrast peak. The hill climbing search determines the lens position which corresponds to the peak of the contrast curve. There are three major steps in full search CDAF (also refers to block 36 in figure 3):

- Determine the direction of movement 351 - In general HCS cannot know in advance which position of the contrast curve it stays and thus which direction to move. This is a preparation step. It requires at least 2 iterations to find the correct direction.

- Coarse search 352 - starts to approach contrast curve peak by moving in contrast increasing direction. This step may roughly detect the contrast peak when passing it through (contrast metric starts to drop). There are contradictory requirements for the size of each search step. It must be reasonably small to not pass the contrast peak too much, in the meanwhile a bigger step could reduce the search time. Therefore, choosing an appropriate step size during the coarse search might greatly influence the overall performance of the CDAF system. This coarse search step might require 1 to 10 iterations and the step size brings major improvement of visual contrast.

- Fine search 353 - Finds an accurate lens position which corresponds to the exact contrast peak position. This step requires 1 to 3 iterations. This step size brings smaller improvement optimizing the visual contrast.

The benefits of CDAF are that it is simple, cost-efficient and it can be run in pure software without any special hardware. However, as can be seen from figure 4, at least there are also the following key limitations of CDAF:

1. Unknown direction to move the lens. It requires at least 2 iteration loops (1-3 frames each).

2. Coarse search requiring 3-8 iterations (1-3 frames each). Therein, the step size cannot be increased too much because it easily may bypass the peak and causes oscillations.

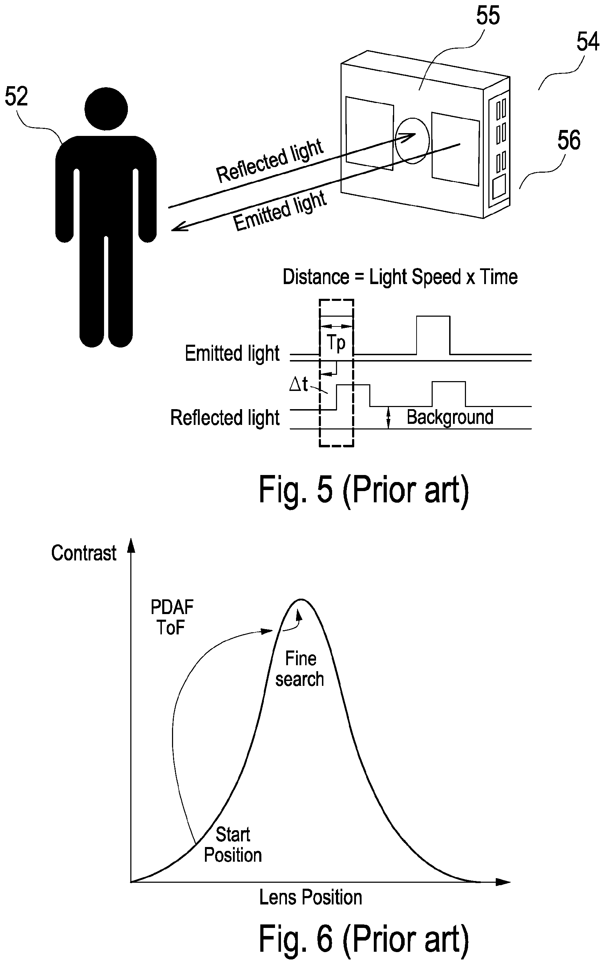

Figure 5 shows a Time of Flight system, which in reality is a much faster approach for autofocusing to address the speed limit of CDAF. ToF measures the distance between the sensor 55 and the object 52, based on the time difference between the emission of a signal and its return to the sensor, after being reflected by an object. The ToF sensor 55 comprises a light-emitting source 56, it may be a solidstate laser or an LED. The emitted light is usually in a near-infrared range which makes it invisible to the eye. The emitted light will be reflected back from the object 52 and the sensor 55 will receive the reflected light. However, the sensor is also receiving ambient light, and natural light also contains infrared light. The light is pulsed or modulated to timely separate emitted and receiving signals. ToF flight time (t) is then converted to the distance (d) to the object: $d = v*t$, where v is the speed of light. Distance to the object is converted to lens displacement calculation.

Figure 6 illustrates the performance of PDAF and ToF based autofocus system, as can be seen from figure 6, compared to the CDAF according to figure 4, the time for direction determination and coarse search is eliminated. In addition, those interactive steps are replaced by a single step estimation, which could reach the nearby area of the contrast peak in a timely manner.

Both PDAF and ToF are able to reduce focusing time by 70-90% compared to CDAF. However, there is also a key limitation of extra cost. The efficient solution which significantly improves AF speed requires either special sensor types or separate costly hardware. There are also additional costs associated with the image signal processor. Image signal processor has to have special blocks in order to process PDAF data (extract data, mask and extract information). Those blocks have to be implemented in hardware which is slow to design.

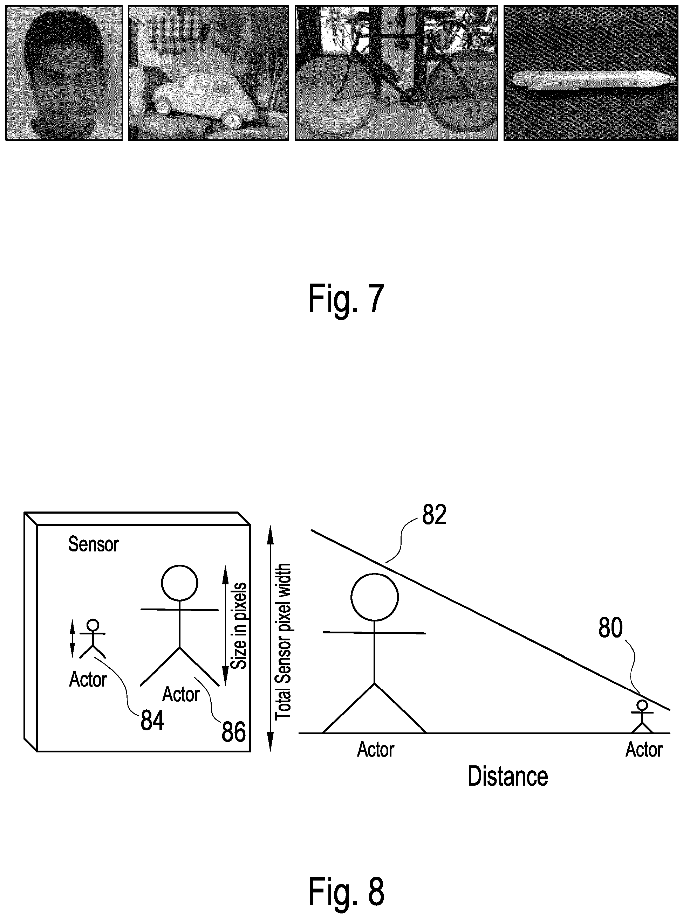

Figure 7 shows some examples of annotated objects according to the present invention, one of the key ideas of the present invention is to make use of ground truth sizes of objects to determine the distance between the lens and the objects. Ground truth sizes is defined as those sizes of having small variability in population and well detectable real-life objects. For example, one or more (but not limited to) of the following could be used as ground truth sizes either alone or in combination:

1. Human related sizes. Preferably, height, head/face size, and in particular distance between eyes which is in most cases 4.5-6 cm. Human hands/ nails. Average human height in a specific country. Preferably by utilizing GPS coordinates and/or gender. More preferably, face related sizes are a special case. Face detection engine is available in most of state-of-art camera designs. For example, it is possible for most of the cameras systems to recognize specific parts of a human face in order to perform some augmented rendering based on the raw image data (e.g., adjusting eyes sizes either manually or automatically, adjusting nose and/or mouth sizes in a different manner). Therefore, face related sizes can be determined with small additional effort in most of the camera systems at no additional associated cost. According to the present invention, such face detection system could either be embedded in the present digital image acquisition apparatus or provided as an external system to cooperate with the present invention.

2. Artificial object sizes linked to human size. Preferably, personal car length 4-6 m height 1.8-2.0m or bike/motorcycle sizes, ceiling height: personal apartments 2.5 m. etc.

3. Standardized constructions element size. Preferably, indoor door height - 2.1 m. Table height 70-90 cm. House height based on number of floors 3 m/floor. Pen/pencil/book size.

4. Natural object sizes: cats/dog size, bushes/tree size (those have bigger variability, but can be useful for depth map reconstruction.) Fruits and vegetable: apple/banana/pear/orange sizes are standardized in some countries.

5. Famous sightseeing places: Eifel tower, China Great Wall, Skyscraper height, Golden Bridge height, etc.

According to the invention, the above ground truth sizes are set according to the lowest value or highest value in reality such that if additional fine search is still necessary to reach a preset contrast level or the contrast peak, a direction determination step is no longer necessary. For example, now we refer to figure 8, which shows the distance estimation process of the present invention. If the ground truth sizes are preset to the lowest values in reality, then it can be inferred that the distance between the lens and the object is always underestimated. Similarly, if the ground truth sizes are preset to the highest values in reality, then it can be inferred that the distance between the lens and the object is always overestimated. As a result, a direction of the following optional fine search is always predictable or known and thus the autofocusing speed can be further improved.

Preferably, the annotate objects may further be associated with additional attributes indicating the reliability of the ground truth sizes and the distance estimation is determined based on the most reliable ground truth. For example, the sizes for famous sightsees and standardized construction elements are more reliable than the size of artificial object size, as the former has lower or even no variability in sizes. More preferably, if objects belonging to the highest reliability level is recognized, the recognition of other objects is skipped.

Preferably, if more than one objects are recognized, the distances calculated based on the sizes of the objects obey majority rule. Since there are situations that several objects are recognized but the distances calculated based on these sizes differ a lot. The reason for this might be, for example, a cat size given as a ground truth size is a grown-up cat. However, the recognized cat in the picture is a baby cat. Utilizing majority rules might highly reduce such "abnormal estimation" in real life. Of course, in case of parity, the final distance estimation might either be calculated based on the mean value of all the estimations or the calculation might be further based on the reliability attributes to determine which group has more weight in the calculation.

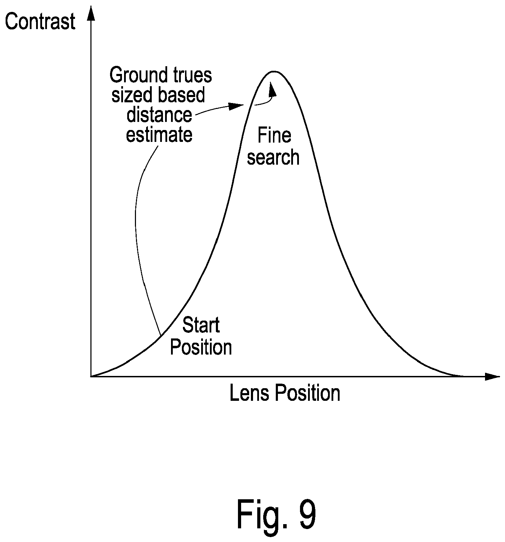

Figure 9 is an illustration of the performance of the AF algorithm according to the present invention. The hill climbing search of CDAF speeds up via the ground truth size-based distance estimation. It outperforms CDAF up to 70 - 80% of execution time. In the meanwhile, compared to ToF and PDAF, the cost for hardware and software is much lower.

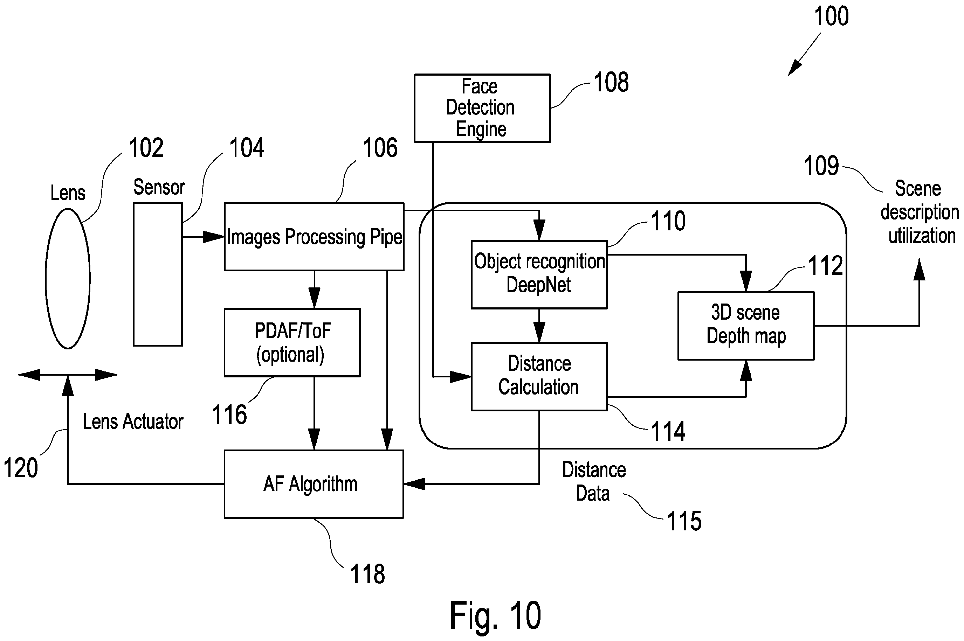

Figure 10 shows a camera system integrated with the present invention, preferably the present invention may be combined with other AF technologies. A lens 102 acquires light rays from objects, sensor 104 transforms the acquired light rays into digital signals, then image processing pipe 106 further process the acquired image and outputs certain data to feed into a system 115 for calculating the distance between the objects and the lens. Therein, the system 115 may comprise Object Recognition DeepNet 110 and/or 3D scene Depth map 112 and/or Distance Calculation unit 114. Preferably, an external or in internal Face Detection Engine 108 may also be included in the system 115 and connected with Distance Calculation unit 114 to help to further improve the distance calculation. Therein, the Face Detection Engine may operate independently from the Object Recognition DeepNet 110 in order to determine the distance to an object being a human face, or cooperatively together. Afterwards, the distance data is fed into the AF algorithm, the AF algorithm may also be fed with other data such as the initial position of the lens and/or mode information, etc, and/or raw data from the sensor and/or data provided by the image process pipe 106 and/or data provided by PDAF/ToF 116. Further, the AF algorithm 118 utilizes the acquired data to instruct the lens actuator 120 to adjust the lens position. The above steps may either be performed for a single time if the desired contrast level has been reached. Alternatively, the above steps may be performed iteratively without further involvement of distance calculating system 115, in each iteration, the algorithm is fed with new contrast metric data and the lens is placed to a new position until the desired contrast level or contrast peak is reached.

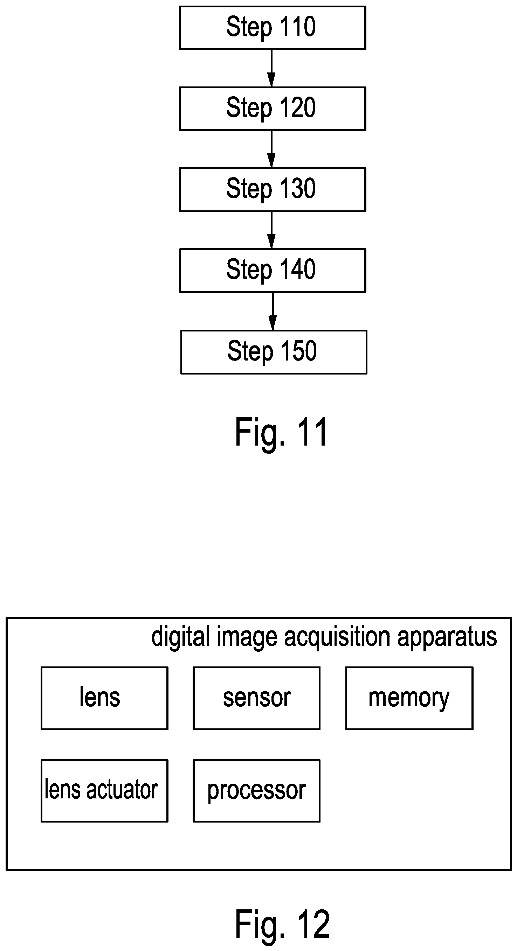

Figure 11 is a flow chart illustrating the steps of a first embodiment of the present invention. It shows an autofocus method based on object size implemented in a digital image acquisition apparatus, comprising: acquiring a digital image of a scene, wherein the scene includes one or more objects (step 110);

recognizing one or more objects based on pattern recognition (step 120);

determining one or more sizes of the recognized object(s) based on a pre-stored database (step 130);

calculating a distance to the recognized object(s) based on the determined size of the recognized object(s) (step 140);

adjusting a lens position based on the calculated distance (step 150).

Thus, in accordance with the present invention, the sizes of the recognized objects are used to determine a distance between the lens and the position of the object.

With the distance information, it is possible to adjust the lens to a desirable position in a timely manner such that the image can be in focus very quickly.

In embodiments of the autofocus method, the pre-stored database comprises ground truth sizes, wherein the ground truth sizes comprise mappings between objects and their respective size.

In embodiments of the autofocus method, the distance is calculated further based on a size of projection relative to sensor size and focal length, preferably according to the following equation:

$$\text{Distance to object}(mm) = \frac{f(mm) \times \text{real height}(mm) \times \text{image height}(pixels)}{\text{object height}(pixels) \times \text{sensor height}(mm)}$$

In embodiments of the autofocus method further comprising, determining a contrast metric and performing fine search iteratively after the lens position is adjusted;
adjusting a new lens position in each iteration until a contrast peak position is reached.

In embodiments of the autofocus method, prior to performing fine search, determining a direction of lens movement based on the changes of the contrast metric.

In embodiments of the autofocus method, if the position of the lens is not known, adjusting the lens to focus to infinity as an initial position.

In embodiments of the autofocus method, the pattern recognition is face recognition.

In embodiments of the autofocus method, the pattern recognition is Deep Learning Net based on object recognition.

In embodiments of the autofocus method, the method is combined with other autofocusing technologies.

In embodiments of the present invention, the autofocus method as described in detail above is implemented in a digital image acquisition device. The digital image acquisition device comprises an acquiring module configured to acquire a digital image of a scene, wherein the scene includes one or more objects; a recognizing module configured to recognize one or more objects based on pattern recognition; a determining module configured to determine one or more sizes of the recognized object(s) based on a pre-stored database; a calculating module configured to calculate a distance to the recognized object(s) based on the determined size of the recognized object(s); and an adjusting module configured to adjust a lens position based on the calculated distance. Further the digital image acquisition device may further be developed along the features of the method above.

Figure 12 shows a device according to an embodiment of the present invention. A digital image acquisition apparatus may comprise at least one or more lenses, a sensor, a memory, a lens actuator and a processor to execute the autofocus method as described above. Preferably, the apparatus may also comprise a lens sensor used for detection the position of the lens. The apparatus can also be integrated with any kind of terminals, such as digital camera, smartphone, tablet, laptop or computer or the like.

**Claims**

1. An autofocus method based on object size implemented in a digital image acquisition apparatus, comprising:

    acquiring a digital image of a scene, wherein the scene includes one or more objects (110);
    recognizing one or more objects based on pattern recognition (120);
    determining one or more sizes of the recognized object(s) based on a pre-stored database (130);
    calculating a distance to the recognized object(s) based on the determined size of the recognized object(s) (140);
    adjusting a lens position based on the calculated distance (150),
    determining a contrast metric and performing fine search iteratively after the lens position is adjusted;
    adjusting a new lens position in each iteration until a contrast peak position is reached,
    wherein the pre-stored database comprises ground truth sizes, the ground truth sizes comprises mappings between objects and their respective size, **characterized in that** the ground truth sizes are set according to the lowest value or highest value in reality such that the direction of the fine search is set accordingly.

2. The method of claims 1, **characterized in that** the distance is calculated further based on a size of projection relative to sensor size and focal length, preferably according to the following equation:

$$Distance\ to\ object\ (mm) = \frac{f(mm) \times object\ height\ (pixels) \times sensor\ height\ (mm)}{object\ height\ (pixels) \times sensor\ height\ (mm)}.$$

3. The method of claim 2, **characterized in that** prior to performing fine search, determining a direction of lens movement based on the changes of the contrast metric.

4. The method of claims 1-3, if the position the lens is not known, adjusting the lens to focus to infinity as an initial position.

5. The method of claims 1-4, **characterized in that** the pattern recognition is face recognition.

6. The method of claims 1-5, **characterized in that** the pattern recognition is Deep Learning Net based object recognition.

7. The method of claims 1-6, **characterized in that** the method is combined with other autofocusing technologies.

8. A digital image acquisition apparatus including a lens, an image sensor, a lens actuator, a processor and a memory having code embedded therein for programming the processor to perform an autofocus method based on object size in accordance with any of the methods of claims 1-7.

**Patentansprüche**

1. Autofokusverfahren basierend auf einer Objektgröße, das in einer digitalen Bilderfassungsvorrichtung implementiert wird, wobei das Verfahren umfasst:

   Erfassen eines digitalen Bildes einer Szene, wobei die Szene ein oder mehrere Objekte (110) aufweist;
   Erkennen eines oder mehrerer Objekte basierend auf Musterkennung (120);
   Bestimmen einer oder mehrerer Größen des/der erkannten Objekts/Objekte basierend auf einer vorgespeicherten Datenbank (130);
   Berechnen eines Abstands zu dem/den erkannten Objekt/en basierend auf der bestimmten Größe des/der erkannten Objekts/Objekte (140);
   Einstellen einer Objektivposition basierend auf dem berechneten Abstand (150), Bestimmen einer Kontrastmetrik und iteratives Durchführen einer Feinsuche nach Einstellung der Objektivposition;
   Einstellen einer neuen Objektivposition in jeder Iteration, bis eine Kontrastspitzenposition erreicht wird,
   wobei die vorgespeicherte Datenbank Ground-Truth-Größen aufweist, wobei die Ground-Truth-Größen Mappings zwischen Objekten und deren jeweiligen Größen umfassen, **dadurch gekennzeichnet, dass** die Ground-Truth-Größen gemäß dem niedrigsten Wert oder dem höchsten Wert in der Realität festgelegt werden, so dass die Richtung der Feinsuche dementsprechend festgelegt wird.

2. Verfahren nach Anspruch 1, **dadurch gekennzeichnet, dass** der Abstand ferner basierend auf einer Größe einer Projektion relativ zur Sensorgröße und Brennweite berechnet wird, vorzugsweise gemäß der folgenden Gleichung:

$$Abstand\ zum\ Objekt\ (mm) = \frac{f(mm)\ x\ Objekth\ddot{o}he\ (Pixel)\ x\ Sensorh\ddot{o}he\ (mm)}{Objekth\ddot{o}he\ (Pixel)\ x\ Sensorh\ddot{o}he\ (mm)}.$$

3. Verfahren nach Anspruch 2, **dadurch gekennzeichnet, dass** vor dem Durchführen der Feinsuche eine Richtung der Objektivbewegung basierend auf den Änderungen der Kontrastmetrik bestimmt wird.

4. Verfahren nach Anspruch 1-3, wobei, wenn die Position des Objektivs unbekannt ist, das Objektiv auf Unendlich als Ausgangsposition eingestellt wird.

**5.** Verfahren nach Anspruch 1-4, **dadurch gekennzeichnet, dass** die Mustererkennung Gesichtserkennung ist.

**6.** Verfahren nach Anspruch 1-5, **dadurch gekennzeichnet, dass** die Musterkennung ein Deep-Learning-Netz basierende Objekterkennung ist.

**7.** Verfahren nach Anspruch 1-6, **dadurch gekennzeichnet, dass** das Verfahren mit anderen Autofokus-Technologien kombiniert wird.

**8.** Digitale Bilderfassungsvorrichtung, die ein Objektiv, einen Bildsensor, einen Objektivaktuator, einen Prozessor und einen Speicher mit darin eingebettetem Code aufweist, um den Prozessor so zu programmieren, dass er ein Autofokusverfahren basierend auf einer Objektgröße nach einem der Verfahren nach Anspruch 1-7 durchführt.

**Revendications**

**1.** Procédé de mise au point automatique basé sur une taille d'objet mise en oeuvre dans un appareil d'acquisition d'image numérique, comprenant :

l'acquisition d'une image numérique d'une scène, dans lequel la scène comporte un ou plusieurs objets (110) ;
la reconnaissance d'un ou plusieurs objets sur la base d'une reconnaissance de formes (120) ;
la détermination d'une ou plusieurs tailles du ou des objets reconnus sur la base d'une base de données pré-stockée (130) ;
le calcul d'une distance au ou aux objets reconnus sur la base de la taille déterminée du ou des objets reconnus (140) ;
l'ajustement d'une position de lentille sur la base de la distance calculée (150), la détermination d'une mesure de contraste et la réalisation de recherche fine de manière itérative après l'ajustement de la position de lentille ;
l'ajustement d'une nouvelle position de lentille à chaque itération jusqu'à ce qu'une position de pic de contraste soit atteinte,
dans lequel la base de données pré-stockée comprend des tailles de réalité de terrain, les tailles de réalité de terrain comprennent des mises en correspondance entre des objets et leur taille respective, **caractérisé en ce que** les tailles de réalité de terrain sont définies selon la valeur la plus basse ou la valeur la plus élevée dans la réalité de telle sorte que la direction de la recherche fine est définie en conséquence.

**2.** Procédé selon la revendication 1, **caractérisé en ce que** la distance est calculée en outre sur la base d'une taille de projection par rapport à une taille de capteur et à une longueur focale, de préférence selon l'équation suivante :

$$Distance\ à\ l'objet\ (\mathrm{mm}) \quad = \frac{f(mm)\ x\ hauteur\ d'objet\ (pixels)\ x\ hauteur\ de\ capteur\ (mm)}{hauteur\ d'objet\ (pixels)\ x\ hauteur\ de\ capteur\ (mm)}.$$

**3.** Procédé selon la revendication 2, **caractérisé par**, avant la réalisation d'une recherche fine, la détermination d'une direction de déplacement de lentille sur la base des changements de la mesure de contraste.

**4.** Procédé selon les revendications 1 à 3, si la position de la lentille n'est pas connue, l'ajustement de la lentille pour focaliser l'infini en tant que position initiale.

**5.** Procédé selon les revendications 1 à 4, **caractérisé en ce que** la reconnaissance de formes est une reconnaissance faciale.

**6.** Procédé selon les revendications 1 à 5, **caractérisé en ce que** la reconnaissance de formes est une reconnaissance d'objet basée sur un réseau d'apprentissage profond.

**7.** Procédé selon les revendications 1 à 6, **caractérisé en ce que** le procédé est combiné avec d'autres technologies de mise au point automatique.

**8.** Appareil d'acquisition d'image numérique comportant une lentille, un capteur d'image, un actionneur de lentille, un processeur et une mémoire ayant un code incorporé sur celle-ci pour programmer le processeur afin de réaliser un procédé de mise au point automatique basé sur une taille d'objet conformément à l'un quelconque des procédés des revendications 1 à 7.

(1A)

(1B)

## Fig. 1

## Fig. 2

30

Camera Sensor — 32

Picture Data

AF Filters
High freguency
content detection — 341

AF Statistics
calculation — 342

Contrast Metric — 343    34

AF Statistic SW or HW

Detection of the
direction of
movement — 351

Coarse search
on contrast
curve — 352

Fine Search — 353

36

New Lens position

## Fig. 3

Contrast

Coarse
search    Fine
search

Find
Direction

Start
Position

Lens Position

## Fig. 4 (Prior art)

55

54

52

56

Reflected light

Emitted light

Distance = Light Speed x Time

Tp

Emitted light

Δt

Reflected light

Background

## Fig. 5 (Prior art)

Contrast

PDAF
ToF

Fine
search

Start
Position

Lens Position

## Fig. 6 (Prior art)

# Fig. 7

# Fig. 8

Fig. 9

Fig. 10

EP 3 936 917 B1

```
┌─────────────────┐
│     Step 110    │
└─────────────────┘
         │
         ▼
┌─────────────────┐
│     Step 120    │
└─────────────────┘
         │
         ▼
┌─────────────────┐
│     Step 130    │
└─────────────────┘
         │
         ▼
┌─────────────────┐
│     Step 140    │
└─────────────────┘
         │
         ▼
┌─────────────────┐
│     Step 150    │
└─────────────────┘
```

# Fig. 11

```
┌───────────────────────────────────────────────────┐
│        digital image acquisition apparatus         │
│  ┌───────────┐   ┌───────────┐   ┌───────────┐     │
│  │    lens   │   │   sensor  │   │   memory  │     │
│  └───────────┘   └───────────┘   └───────────┘     │
│  ┌───────────┐   ┌───────────┐                     │
│  │lens actuator│ │ processor │                     │
│  └───────────┘   └───────────┘                     │
└───────────────────────────────────────────────────┘
```

# Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120075492 A1
- US 2015023602 A1
- US 2020137298 A1
- US 2007286590 A1
- US 2009116830 A1
- US 2007229797 A1
- US 2010157135 A1
- US 2002001398 A1